(19) Europäisches Patentamt
European Patent Office
Office européen des brevets

(11) **EP 3 446 592 B1**

(12) **EUROPEAN PATENT SPECIFICATION**

(45) Date of publication and mention
of the grant of the patent:
**14.10.2020 Bulletin 2020/42**

(51) Int Cl.:
**A45D 44/00** *(2006.01)*   **G06T 7/00** *(2017.01)*

(21) Application number: **18154567.4**

(22) Date of filing: **01.02.2018**

(54) **DEVICE AND METHOD FOR EYELINER-WEARING GUIDE**

VORRICHTUNG UND VERFAHREN FÜR EYELINER-TRAGFÜHRUNG

DISPOSITIF ET PROCÉDÉ DE GUIDAGE D'APPLICATION D'EYE-LINER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.08.2017 CN 201710733033**

(43) Date of publication of application:
**27.02.2019 Bulletin 2019/09**

(73) Proprietor: **Cal-Comp Big Data, Inc.
New Taipei City 22201 (TW)**

(72) Inventors:
• **SHEN, Shyh-Yong
New Taipei City 22201 (TW)**
• **CHI, Min-Chang
New Taipei City 22201 (TW)**
• **TSAI, Cheng-Hsuan
New Taipei City 22201 (TW)**

(74) Representative: **Ter Meer Steinmeister & Partner
Patentanwälte mbB
Nymphenburger Straße 4
80335 München (DE)**

(56) References cited:
**JP-A- 2000 285 222      US-A1- 2012 044 335
US-A1- 2016 357 578**

**Description**

1. Field of the Invention

The invention relates to a facial feature recognition technique, and more particularly, to a device for eyeliner-wearing guide.

2. Description of Related Art

The natural instinct of a female is beauty care. Many women will highlight their facial features through makeup. For example, the appearance may be enhanced or altered by putting on makeup at places like lips, eyes, eyebrows, etc. However, makeup is not one of the innate skills. Those who wish to improve the makeup effect can do so through a lot of learning together with regular practices.

Currently, makeup learners can obtain makeup information by getting related images/videos from the Internet. Nonetheless, the learning approach of getting related images/videos from the Internet can often lead to deviations or errors instead of expected result in actual practices. In particular, deviations or errors are likely to occur when putting on eye shadow or eyeliner around eyes. Accordingly, finding a way for learning makeup with modern equipments is one of the issues to be solved by manufacturers through development of new technologies.

One makeup learning system is already known from JP 2000 285222 A. This system provides a user with a guideline for applying eyeliner or eye shadow to his or her face. In a first step, the user activates a camera in order to feed the system with an image of his or her face. Additionally, the user selects a desired eyeliner drawing pattern or makeup type. The system extracts feature points from the image data and applies the respective eyeliner drawing pattern or the pattern which belongs to the selected makeup type. The result is displayed on a display apparatus and serves as a template for the user.

US 2012/0044335 A1 suggests a similar makeup simulation system. The system comprises picture taking means for taking dynamic picture images of a user. Furthermore, the system includes processing means for processing the image and display means for displaying the dynamic image output. Apart from providing instructions for applying eyeliner or eye shadow, the system in US 2012/0044335 A1 also recommends where to apply blush, lipstick and other cosmetic products.

Another device is disclosed in US 2016/0357578 A1. This device also includes a display and a controller configured to display a face image of a user in real-time so as to provide a makeup mirror with makeup guide information that match the facial features of a user.

SUMMARY OF THE INVENTION

The present disclosure provides a device for eyeliner-wearing guide, which can be used to display a preferable eyeliner-wearing guide area according to a facial image of the user so the user can put on eyeliner according to the prompting provided by the eyeliner-wearing guide device. As a result, a convenient and interactive makeup teaching can be provided.

The device for eyeliner-wearing guide of the invention includes the features of independent claim 1. More specifically the device includes an image capturing device, a processor and a display. The image capturing device captures a facial image of a user, and the facial image at least includes an eye portion of the user. The processor is configured to receive the facial image, obtain a plurality of eye feature points according to the facial image, and obtain an eyeliner guide area by performing a calculation according to the eye feature points and an eyeliner type. The display displays the facial image of the user and the corresponding eyeliner guide area to guide the user for wearing a makeup according to the eyeliner guide area.

A method for eyeliner-wearing guide not falling under the scope of the present invention as defined by the appended claims includes the following steps. A facial image of a user is captured, and the facial image at least includes an eye portion of the user. A plurality of eye feature points are obtained according to the facial image of the user, and an eyeliner guide area is obtained by performing a calculation according to the eye feature points and an eyeliner type. Also, the facial image of the user and the eye-liner guide area corresponding thereto are displayed to guide the user for wearing a makeup according to the eyeliner guide area.

Based on the above, with the device for eyeliner-wearing guide provided by the present disclosure, the eyeliner guide area may be calculated and displayed according to the eye portion in the facial image of the user so that the user can be aware of the more preferable eyeliner-wearing area for makeup which allows the user to properly put on the eyeliner. In addition to the eyeliner guide area generated by utilizing the two adjacent eyelid feature points and the eyeliner width value corresponding to the eyeliner type, the eyeliner end guide point corresponding to different eyeliner types may also be generated by utilizing the outer corner feature point and the outer corner eyeliner width corresponding to the eyeliner type so that the eyeliner guide area may display the outer corner in different shapes. In this way, even if the user is not familiar with makeup, the user is still able to put on the eyeliner according to the prompt provided by the eyeliner-wearing guide device. As a result, a convenient and interactive makeup teaching can be provided.

To make the above features and advantages of the invention more comprehensible, several embodiments accompanied with drawings are described in detail as follows.

BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 shows a schematic diagram of the device for eyeliner-wearing guide in an embodiment of the disclosure.
FIG. 2 shows a system block diagram of the device for eyeliner-wearing guide in an embodiment of the disclosure.
FIG. 3 shows a schematic diagram of eyeliner types in an embodiment of the disclosure.
FIG. 4 shows a flowchart of the method for eyeliner-wearing guide in an embodiment of the disclosure.
FIG. 5 is a detailed flowchart of step S420 in FIG. 4.
FIG. 6 and FIG. 7 are schematic diagrams of step S510 and step S520 of FIG. 5, respectively.
FIG. 8 shows a schematic diagram of an upper eyelid guide line in an eyeliner guide area not falling under the scope of the present invention.
FIG. 9 shows a schematic diagram of an upper eyelid guide line and a lower eyelid guide line in an eyeliner guide area not falling under the scope of the present invention.

DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

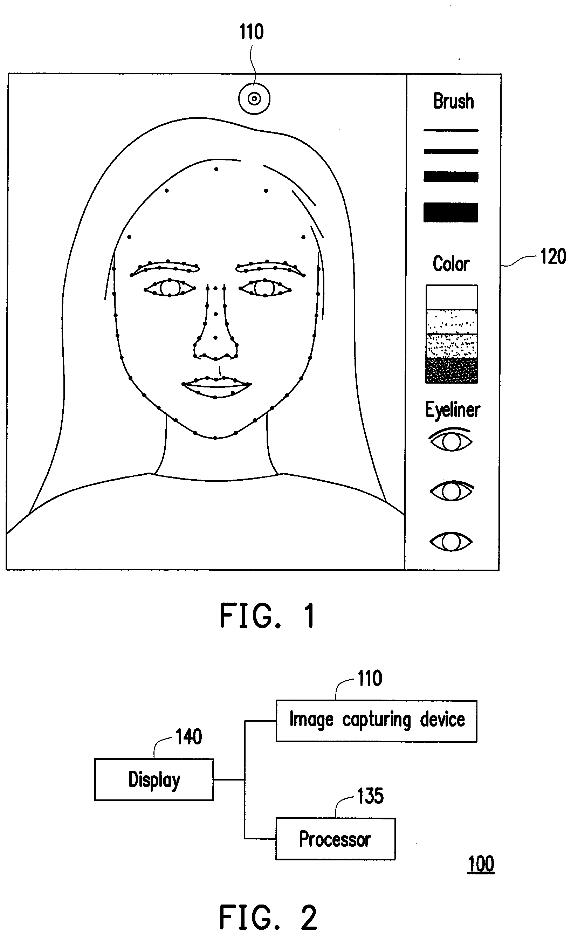

FIG. 1 shows a schematic diagram of the device for eyeliner-wearing guide in an embodiment of the disclosure, and FIG. 2 shows a system block diagram of the device for eyeliner-wearing guide in an embodiment of the disclosure. Referring to FIG. 1 and FIG. 2 together, in the present exemplary embodiment, an eyeliner-wearing guide device 100 has an image capturing device 110, a display 140 and a processor 135.

The image capturing device 110 is configured to capture a facial image of a user. The present embodiment aims to calculate for an ideal position for eyeliner-wearing by capturing an eye portion in the facial image of the user. Accordingly, it is required that the facial image of the user includes the eye portion from a left-half face or a right-half face, so that a preferable relative position may be calculated for the eyeliner of the left-half face or the eyeliner of the right-half face. The image capturing device 110 is, for example, embedded camcorders (or cameras) or cell phones (or cameras) connected in external manner, which are not particularly limited by the disclosure.

The display 140 can display multimedia information and the facial image of the user in real time. For example, the display unit 140 can display the facial image of the user and provide options including multiple eyeliner types, distance adjustments for each eyeliner of the corresponding eyeliner type (e.g., stretching or shortening an outer corner eyeliner or an overall eyeliner width) and eyeliner colors for the user to select. In the present exemplary embodiment, the display 140 may be a display that is disposed behind a material with high reflection index (e.g., a mirror) and manufactured in combination with OLED (Organic Light-Emitting Diode). Thus, the user is able to see his/her own face through the mirror, and the display 140 may also display related information on the mirror for the user to check, touch and select. However, the disclosure is not limited to the above. The eyeliner-wearing guide device 100 of the present embodiment may also be an equipment disposed on a dressing table. A screen of the eyeliner-wearing guide device 100 may be disposed behind a mirror to display text or image for the user to view through the mirror. In other embodiments, the eyeliner-wearing guide device 100 may also be consumer electronic products (e.g., a smart phone, a tablet computer, etc.) or may be a portable mirror box formed in combination with a portable mirror.

The processor 135 can perform a calculation according to the facial image of the user captured by the image capturing device 110 so as to capture a plurality of facial feature points of the user related to the user's face (especially, eye feature points at an upper eyelid portion, a lower upper eyelid and an outer corner portion). Then, after an eyeliner guide area is obtained by performing a calculation according to the eye feature points and the eye-liner type by the processor 135, the facial image of the user and the eyeliner guide area are displayed by the display 140 so the user may be guided for wearing a makeup with reference to the eyeliner guide area. The above-mentioned "eyeliner type" may be customized by the user, or a preset eyeliner type may be selected by the user with assistance of the processor 135 according to a face shaped of the user obtained from the facial image. The eye-liner guide area of the present embodiment is an eyeliner guide area represented by dotted-line. Person who applies the present embodiment may also have the eyeliner guide area represented by ways of an upper eyelid/lower eyelid guide line, a direction arrow guide line, etc.

The processor 135 may be a central processing unit (CPU), a microprocessor, an application specific integrated circuit (ASIC), a programmable logic device (PLD) or other similar devices. The processor 135 is configured to run various software programs and/or instruction sets required for providing the eyeliner indication area. In the present exemplary embodiment, the processor 135 is a face detection system running a Dlib-based database (which may also be referred to as "Dlib Face Landmark") to detect and analyze 194 facial feature points of the user's face. These facial feature points are used to represent various face portions including eyes, eyebrows, nose, lips, chin outline, etc. In other cases, it is also possible that only 119 facial feature points of the user's face are analyzed. Alternatively, the facial feature points of the user may be captured by using other algorithms for detecting the facial feature points. The present embodiment and the following embodiments are described using left eye feature points of the user as an example. For example, the feature points of a left eye are numbered by points 114 to 123 (for upper eyelid feature points), points 125 to 133 (for lower eyelid feature points) and a point 124 (for an outer corner feature point). Person who applies the present embodiment should be able to apply various computational methods and examples for the left eye feature points. The present embodiment is not limited to only the realization of the eyeliner guide area corresponding to the left eye, and the eyeliner guidance area corresponding to both eyes may also be realized.

In the present embodiment, when the user is facing the mirror while the eyeliner-wearing guide device 100 is running, the display 140 will display the facial image of the user and analyze each feature point in the facial image in real time. In order to facilitate the interaction with the eyeliner drawing guide device, in the present disclosure, an eyeliner guide area with better visual design for makeup is further calculated based on positions of the eye portion of the user. Then, such eyeliner guide area is displayed on the facial image of the user by the display 140 so as to prompt the user positions for eyeliner-wearing. Further, the user can adjust a thickness, a position, a shape, and a preset distance between eyelids for the eyeliner guide area through a display interface shown by FIG. 1, so as to satisfy what the user demands. In this way, the user is able to put on the eyeliner on an actual eye portion of the user with the guiding of the eyeliner guide area displayed by the display 140.

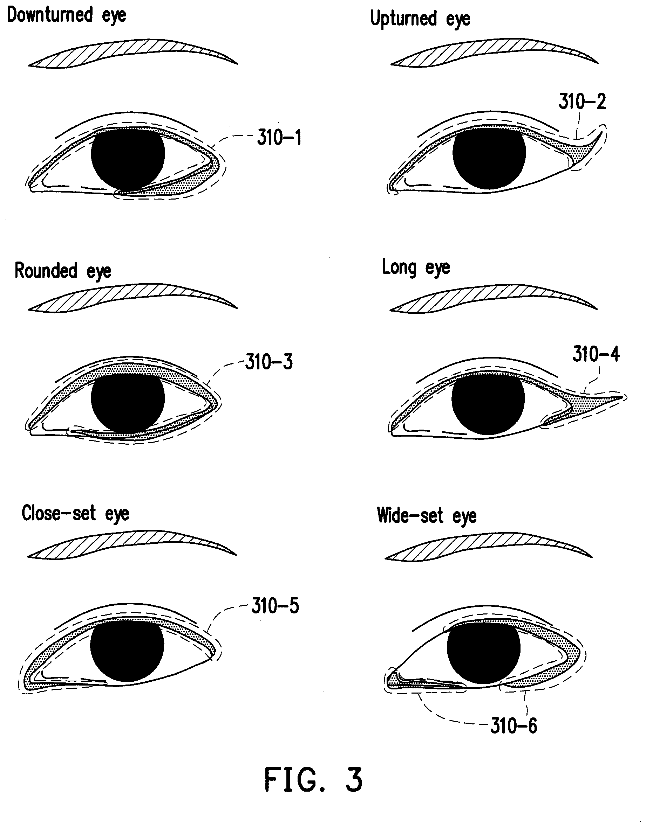

FIG. 3 shows a schematic diagram of eyeliner types in an embodiment of the disclosure. As shown in FIG. 3, the eyeliner type used in the present embodiment includes one of a downturned eyeliner (a.k.a. dog eyeliner), an upturned eyeliner (a.k.a. cat eyeliner), a rounded eyeliner, a long eyeliner, a close-set eyeliner and a wide-set eyeliner, or a combination of the above. The user can select a desired eyeliner type based on demand, or let the eyeliner-wearing guide device 100 assist in recommending the eyeliner type that suits the user. The eyeliner-wearing guide device 100 can display eyeliner guide areas 310-1 to 310-6 in different shapes according to the different eyeliner type. Each eyeliner type in the present embodiment corresponds to a respective eyeliner width table. Eyeliner widths are respectively described in Table 1 to Table 6 below as examples for realizing the embodiment of the invention.

Table 1 (downturned eyeliner):

| Feature point number | Eyeliner width | Feature point number | Eyeliner width |
|---|---|---|---|
| 114 | 0.1 | 124 | 0.2 |
| 115 | 0.1 | 125 | 0.4 |
| 116 | 0.1 | 126 | 0.6 |
| 117 | 0.2 | 127 | 0.6 |
| 118 | 0.2 | 128 | 0.4 |
| 119 | 0.2 | 129 | 0.2 |
| 120 | 0.2 | 130 | 0 |
| 121 | 0.2 | 131 | 0 |
| 122 | 0.1 | 132 | 0 |
| 123 | 0.1 | 133 | 0 |

Table 2 (upturned eyeliner):

| Feature point number | Eyeliner width | Feature point number | Eyeliner thickness |
|---|---|---|---|
| 114 | 0.1 | 124 | 1.2 |
| 115 | 0.1 | 125 | 0.1 |
| 116 | 0.1 | 126 | 0.1 |
| 117 | 0.2 | 127 | 0 |
| 118 | 0.2 | 128 | 0 |
| 119 | 0.2 | 129 | 0 |
| 120 | 0.2 | 130 | 0 |
| 121 | 0.2 | 131 | 0 |
| 122 | 0.3 | 132 | 0 |
| 123 | 0.4 | 133 | 0 |

Table 3 (rounded eyeliner):

| Feature point num-ber | Eyeliner width | Feature point num-ber | Eyeliner width |
|---|---|---|---|
| 114 | 0.1 | 124 | 0.2 |
| 115 | 0.1 | 125 | 0.1 |
| 116 | 0.2 | 126 | 0.1 |
| 117 | 0.4 | 127 | 0 |
| 118 | 0.6 | 128 | 0.1 |
| 119 | 0.6 | 129 | 0.2 |
| 120 | 0.6 | 130 | 0.1 |
| 121 | 0.6 | 131 | 0 |
| 122 | 0.4 | 132 | 0 |
| 123 | 0.3 | 133 | 0 |

Table 4 (long eyeliner):

| Feature point number | Eyeliner width | Feature point number | Eyeliner width |
|---|---|---|---|
| 114 | 0.1 | 124 | 1.2 |
| 115 | 0.1 | 125 | 0.1 |
| 116 | 0.1 | 126 | 0 |
| 117 | 0.1 | 127 | 0 |
| 118 | 0.1 | 128 | 0 |
| 119 | 0.1 | 129 | 0 |
| 120 | 0.1 | 130 | 0 |
| 121 | 0.1 | 131 | 0 |
| 122 | 0.2 | 132 | 0 |
| 123 | 0.2 | 133 | 0 |

Table 5 (close-set eyeliner):

| Feature point number | Eyeliner width | Feature point number | Eyeliner width |
|---|---|---|---|
| 114 | 0.1 | 124 | 1.2 |
| 115 | 0.1 | 125 | 0.1 |
| 116 | 0.1 | 126 | 0 |
| 117 | 0.1 | 127 | 0 |
| 118 | 0.1 | 128 | 0 |
| 119 | 0.1 | 129 | 0 |
| 120 | 0.1 | 130 | 0 |
| 121 | 0.1 | 131 | 0 |
| 122 | 0.2 | 132 | 0 |
| 123 | 0.2 | 133 | 0 |

Table 6 (wide-set eyeliner):

| Feature point number | Eyeliner width | Feature point number | Eyeliner width |
|---|---|---|---|
| 114 | 0 | 124 | 0.2 |
| 115 | 0 | 125 | 0.2 |
| 116 | 0 | 126 | 0.2 |
| 117 | 0 | 127 | 0.2 |
| 118 | 0 | 128 | 0 |
| 119 | 0.1 | 129 | 0 |
| 120 | 0.1 | 130 | 0 |
| 121 | 0.2 | 131 | 0.1 |
| 122 | 0.2 | 132 | 0.1 |
| 123 | 0.2 | 133 | 0.1 |

Each eyeliner width table in Table 1 to Table 6 is provided with the corresponding eyeliner width values corresponding to each of the upper eyelid feature points and the lower eyelid feature points. In Table 1 to Table 6, "Feature point number" refers to the feature points 114 to 133 of the left eye; "Eyeliner width" refers to the eyeliner width value corresponding to each of the eyelid feature points (the points 114 to 123 and 125 to 133) or the outer corner feature point (the point 124). Values of the "eyeliner width" are in centimeters (cm). Person who applies the present embodiment may also use pixel as the unit. The width of each pixel in the present embodiment may be 0.04 cm, and each centimeter is equal to a width of 25 pixels.

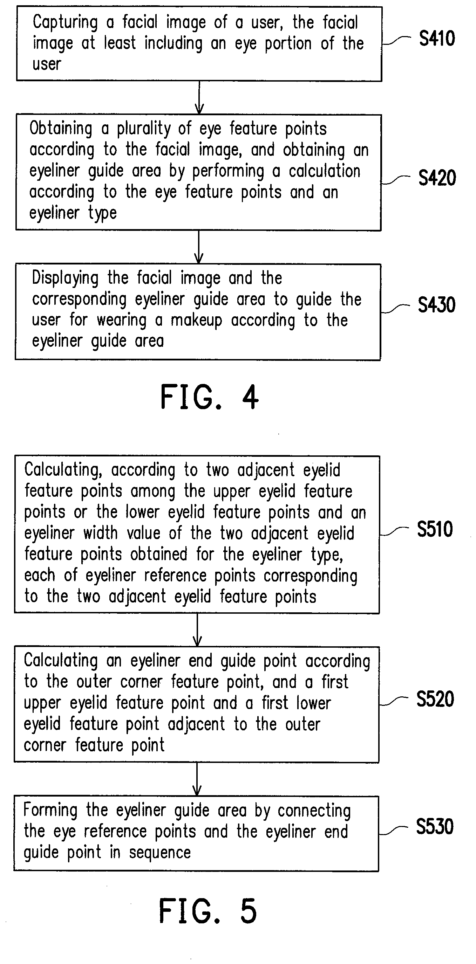

FIG. 4 shows a flowchart of the method for eyeliner-wearing guide in an embodiment of the disclosure. With reference to FIG. 2 and FIG. 4, in step S410, the image capturing device 110 captures a facial image of a user, and the facial image at least includes an eye portion of the user. In step S420, the processor 135 receives the facial image from the image capturing device 110, obtains a plurality of eye feature points according to the facial image, and obtains an eyeliner guide area by performing a calculation according to the eye feature points and an eyeliner type. In the present embodiment, the facial image may include only one eye portion (e.g., only includes the left eye or the right eye) or may include both eye portions. The processor 135 may obtain only one of the eye portions for calculating the corresponding eyeliner guide area through the image capturing device 110, and may also calculate the eyeliner guide areas corresponding to the eye portions at the same time. In step S430, the processor 135 uses the display 140 to display the facial image and the corresponding eyeliner guide area (e.g., the eyeliner guide areas 310-1 to 310-6 in FIG. 3) to guide the user for wearing a makeup according to the eyeliner guide area.

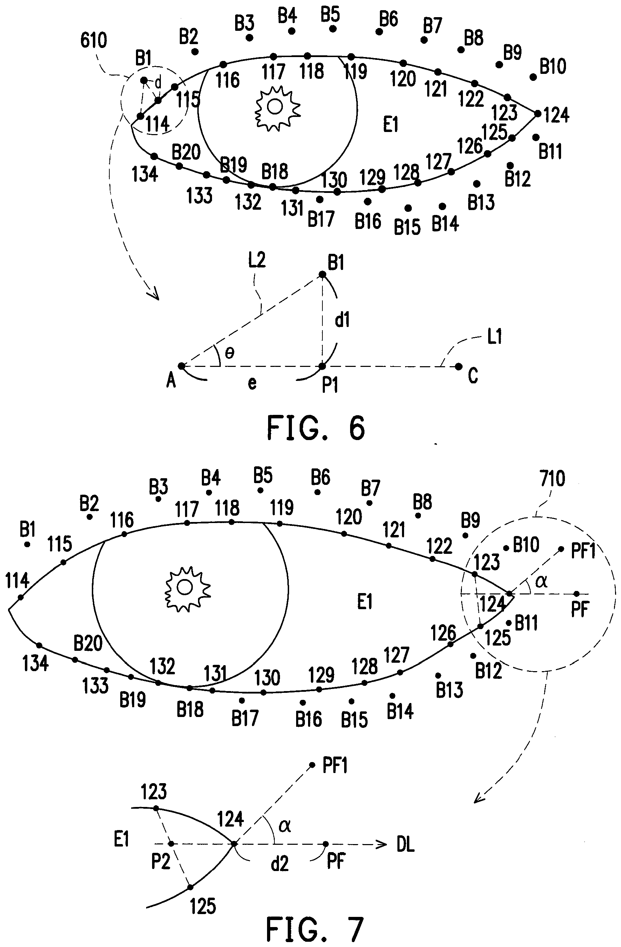

Detailed process of step S420 is described below with reference to FIG. 5 to FIG. 7. FIG. 5 is a detailed flowchart of step S420 in FIG. 4. FIG. 6 and FIG. 7 are schematic diagrams of step S510 and step S520 of FIG. 5, respectively. In FIG. 6 and FIG. 7, a left eye E1 of the user serves as an example of the present embodiment of the invention.

With reference to FIG. 5, in step S510, the processor 135 of FIG. 2 calculates, according to two adjacent eyelid feature points among the upper eyelid feature points (e.g., the points 114 to 123) and the lower eyelid feature points (e.g., the points 125 to 134) and an eyeliner width value of the two adjacent eyelid feature points obtained for the eyeliner type, each of eyeliner reference points corresponding to the two adjacent eyelid feature points. In detail, with reference to FIG. 6, the two adjacent upper eyelid feature points 114 and 115 are used as an example for calculating a corresponding eyeliner reference point B1. In order to more clearly describe an area 610 where the upper eyelid feature points 114 and 115 are located, the area 610 is enlarged and illustrated below the left eye E1 of FIG. 6. In the present embodiment, the two adjacent eyelid feature points 114 and 115 are referred to as a point A and a point C.

Step S510 is described in detail as follows. The processor 135 can obtain a distance between the two adjacent eyelid feature points (the point A and the point C), and obtain a distance e (by dividing said distance into half) and a coordinate of a first indication point PI at a middle of the two adjacent eyelid feature points (the point A and the point C). Then, the processor 135 checks the eyeliner width table corresponding to the eyeliner type for the two adjacent eyelid feature points (the point A and the point C) so as to obtain the eyeliner width values corresponding to the point A and the point C. Herein, it is assumed that the preset eyeliner type is "Downturned eyeliner" corresponding to Table 1. As such, according to Table 1, it can be known that both the eyeliner widths of the point A (114) and the point C (115) are 0.1. Therefore, an eyeliner width value d1 of the adjacent eyelid feature points (the point A and the point C) is set as 0.1 in the present embodiment. In the case where eyeliner widths corresponding to the two adjacent eyelid feature points are different, based on demand of person who applies the present embodiment, an average value between the two eyeliner widths, as well as a maximum value or a minimum value among the two eyeliner widths may serve as the eyeliner width value d1. In other words, the eyeliner width value corresponding to the adjacent eyelid feature points is obtained according to the eye-liner width table of the eyeliner type.

After obtaining the distance e and the eyeliner width value d1, the processor 135 can calculate an angle $\theta$ according to a half of the distance e and the eyeliner width value d1. The angle $\theta$ is an included angle between a first line segment L1 formed by connecting the two adjacent eyelid feature points A and C and a second line segment L2 formed by connecting the eyeliner reference point (e.g., the point B1) with one of the two adjacent eyelid feature points (e.g., the point A). Equation for calculating the angle $\theta$ is provided as follows.

$$\theta = \tan^{-1}\frac{d}{e} \qquad \text{Equation (1)}$$

Then, the processor 135 can calculate a coordinate of the eyeliner reference point B1 according to the angle $\theta$ and a first indication point PI at the middle of the two adjacent eyelid feature points A and C. Equation for calculating the coordinate of the eyeliner reference point B1 is provided as follows.

$$B1(x,y) = \frac{\cos\theta}{\sin\theta} \times \frac{-\sin\theta}{\cos\theta} P1(x,y) \qquad \text{Equation (2)}$$

It should be noted that, the other adjacent eyelid feature points (e.g., the points 115 and 116, the points 116 and 117, the points 117 and 118; the points 125 and 126, the points 126 and 127, the points 127 and 128) may also serve as the point A and the point C, so that the processor 135 can calculate the eyelid reference point (e.g., the points B2, B3, B4; the points B11, B12, B13) corresponding to the adjacent upper eyelid feature points and the adjacent lower eyelid feature points according to the above equation. The points B2 to B10 are the eyeliner reference points of the adjacent upper eyelid feature points 115 to 123, respectively; the points B11 to B20 are the eyeliner reference points of the adjacent lower eyelid feature points 125 to 134, respectively.

Referring back to FIG. 5, in step S520, the processor 135 of FIG. 2 calculates an eyeliner end guide point according to the outer corner feature point (e.g., the point 124), and a first upper eyelid feature point (e.g., the point 123) and a first lower eyelid feature point (e.g., the point 125) adjacent to the outer corner feature point (e.g., the point 124). It should be noted that, for some of the eyeliner type (e.g., the close-set eyeliner and the rounded eye-liner), at the outer corner portion of the left eye E1, it may not be required to put on the eye-liner or it is only required to put on a shorter eyeliner. In such case, the step S520 in which the eyeliner end guide point calculated for completing the entire eyeliner guide area may not be necessary. In other words, in some embodiments consistent with the invention, the eye-liner guide area may be directly generated by connecting the eyeliner reference points B1 to B20 as described in step S510 without performing step S520. Referring to FIG. 5 and FIG. 7 together, in order to more clearly describe an area 710 where the outer corner feature point (the point 124) is located, the area 710 is enlarged and illustrated below the left eye E1 of FIG. 7.

First, the processor 135 calculates a second indication point P2 at a middle of the first upper eyelid feature point 123 and the first lower eyelid feature point 125. Further, the processor 135 obtains an outer corner eyeliner width value d2 (e.g., 1.2 cm) according to the eyeliner width table (e.g., Table 4) corresponding to the eyeliner type (e.g., the long eyeliner) of the outer corner feature point 124. Subsequently, the processor 135 forms an outer corner reference point PF that is distanced from the outer corner feature point 124 by the outer corner eyeliner width value d2 in a direction DL from the second indication point P2 towards the outer corner feature point.

Next, the processor 135 forms the eyeliner end guide point according to the eye-liner type and the outer corner reference point PF. In the case where the eyeliner type is the long eyeliner/the downturned eyeliner/the wide-set eyeliner, the outer corner reference point PF will be the eyeliner end guide point since the outer corner of these eyeliner type does not turn upwardly. On the other hand, in the case where the eyeliner type is the upturned eye-liner, since the outer corner does turn upwardly, the processor 135 can calculate an eyeliner end guide point PF1 according to the outer corner PF and a preset upturn angle α. Equation for calculating the eyeliner end guide point PF1 is provided as follows.

$$PF1(x,y) = \frac{\cos\alpha}{\sin\alpha} \times \frac{-\sin\alpha}{\cos\alpha} PF(x,y) \qquad \text{Equation (3)}$$

Referring back to FIG. 5, in step S530, the processor 135 forms the eyeliner guide area by connecting the eye reference points (e.g., the points B1 to B20) and the eyeliner end guide point (e.g., the point PF or the point PF1) in sequence. The so-called "connecting" may refer to directly connecting these points in sequence. However, the eyeliner guide area depicted this way has poor visual effect. The term "connecting" may also refer to a calculation performed by software program for an arc capable of passing through the eyeliner reference points and the eyeliner end guide point. In this way, the area between the arc and the upper eyelid/lower eyelid may serve as the eyeliner guide area. Person who applies the present embodiment may also slightly adjust a position of the eyeliner guide area or a size of the area utilizing various face algorithms or user settings. For example, the eyeliner guide area may be moved forward or backward by several pixels, or a front end of the eyeliner guide area may be extended forward by several pixels.

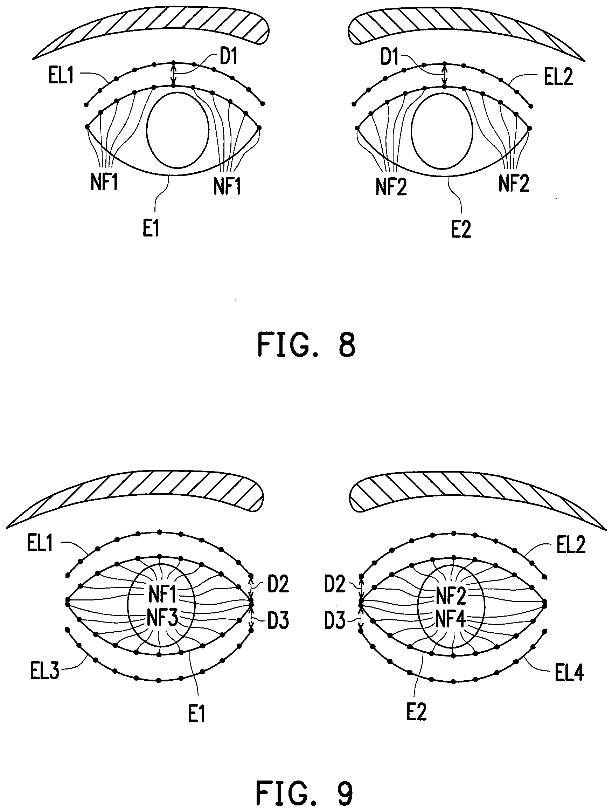

FIG. 5 to FIG. 7 illustrate an implementation for the eyeliner guide area according to the present invention. Another implementation for the eyeliner guide area which does not fall under the scope of the present invention is disclosed below with reference to FIG. 8 and FIG. 9. FIG. 8 shows a schematic diagram of an upper eyelid guide line in an eyeliner guide area. FIG. 9 shows a schematic diagram of an upper eyelid guide line and a lower eyelid guide line in an eyeliner guide area. E1 and E2 in FIG. 8 and FIG. 9 represent the eye portions (the left eye and the right eye) of the user, respectively.

A major difference between the present invention and examples of FIG.8 and FIG.9 is described as follows. In the present example, process regarding "obtaining an eyeliner guide area by performing a calculation according to the eye feature points and an eyeliner type" in step S420 in FIG. 4 is realized by forming a plurality of eyeliner reference points by directly moving each of upper eyelid feature points NF1 and NF2 upward by a first preset distance D1 and forming upper eyeliner guide lines EL1 and EL2 in the eyeliner guide area by connecting the upper eyeliner reference points, as shown in FIG. 8. In FIG. 9, other than forming the upper eyeliner guide lines EL1 and EL2 by moving each of the upper eyelid feature points NF1 and NF2 upward by a second preset distance D2, the processor may further form a plurality of lower eyelid reference points by moving each of lower eyelid feature points NF3 and NF4 downward by a second preset distance D3 and form lower eyeliner guide lines EL3 and EL4 in the eyeliner guide area by connecting the lower eyeliner reference points.

The upper eyelid feature points NF1 may be the 114th to 124th feature points of the left eye E1 in "Dlib Face Landmark"; the upper eyelid feature points NF2 may be the 134th to 144th feature points of the right eye in "Dlib Face Landmark". The lower eyelid feature points NF3 may be the 125th to 133rd feature points of the left eye in "Dlib Face Landmark"; the lower eyelid feature points NF4 may be the 145th to 153rd feature points of the right eye in "Dlib Face Landmark". The first preset distance D1, the second preset distance D2 or the third preset distance D3 may be a spacing of one, five, eight or ten pixels. Person who applies the present example may adjust a length of the first preset distance D1, the second preset distance D2 or the third preset distance D3 based on demand, and may also change a value of the first preset distance D1, the second preset distance D2 or the third preset distance D3 according to the adjustment of the user. The preset distances D1, D2 and D3 may also be represented by tables used in the foregoing embodiment so each of the upper eyelid feature points or the lower eyelid feature points can correspond to a different distance. In this way, the upper eyeliner guide lines EL1 and EL2 and the lower eyeliner guide lines EL3 and EL4 may be generated with different shapes according to the different eyeliner type.

In the step S430 of FIG. 4, the processor 135 uses the display 140 to display the facial image and the corresponding eyeliner guide area (e.g., the upper eyeliner guide lines EL1 and EL2 and the lower eyeliner guide lines EL3 and EL4 in FIG. 8 and FIG. 9) to guide the user for wearing a makeup according to the eyeliner guide area.

In summary, with the device for eyeliner-wearing guide provided by the present disclosure, the eyeliner guide area may be calculated and displayed according to the eye portion of the facial image of the user so that the user can be aware of the more preferable eyeliner-wearing area for makeup which allows the user to properly put on the eyeliner. In addition to the eyeliner guide area generated by utilizing the two adjacent eyelid feature points and the eyeliner width value corresponding to the eyeliner type, the eyeliner end guide point corresponding to different eyeliner types may also be generated by utilizing the outer corner feature point and the outer corner eye-liner width corresponding to the eyeliner type so that the eyeliner guide area may display the outer corner in different shapes. In this way, even if the user is not familiar with makeup, the user is still able to put on the eyeliner according to the prompt provided by the eyeliner-wearing guide device. As a result, a convenient and interactive makeup teaching can be provided.

**Claims**

1.    A device (100) for eyeliner-wearing guide, comprising:

an image capturing device (110), configured to capture a facial image of a user, wherein the facial image at least comprises an eye portion (E1, E2) of the user;
a processor (135), configured to receive the facial image, obtain a plurality of eye feature points (114-134, NF1-NF4) according to the facial image, and obtain an eyeliner guide area (310-1-310-6, EL1, EL2) by performing calculation according to the eye feature points (114-134, NF1-NF4) and an eyeliner type; and
a display (140), configured to display the facial image of the user and the corresponding eyeliner guide area (310-1-310-6, EL1, EL2) to guide the user for wearing a makeup according to the eye-liner guide area (310-1-310-6, EL1, EL2), wherein the eye feature points comprise a plurality of upper eyelid feature points (114-123) and a plurality of lower eyelid feature points (125-133) corresponding to the eye portion (E1, E2),
wherein the processor (135) calculates, according to two adjacent eyelid feature points (114-123, 125-133) among the upper eyelid feature points (114-123) or the lower eyelid feature points (125-133) and an eyeliner width value (d1) of the two adjacent eyelid feature points (114-123, 125-133) obtained for the eyeliner type, each of eyeliner reference points (B1-B20) corresponding to the two adjacent eyelid feature points (114-123, 125-133), and
the processor (135) forms the eyeliner guide area (EL1, EL2) by connecting the eyeliner reference points (B1-B20).

2.    The device (100) for eyeliner-wearing guide according to claim 1, wherein the eyeliner type is provided with a corresponding eyeliner width table, and the eyeliner width table is provided with the corresponding eyeliner width values (d1) corresponding to each of the upper eyelid feature points (114-123) and the lower eyelid feature points (125-134),
wherein the eyeliner width value (d1) corresponding to the two adjacent eyelid feature points (114-123, 125-133) is obtained through the eyeliner width table of the eyeliner type.

3.    The device (100) for eyeliner-wearing guide according to claim 1, wherein the processor (135) calculates an angle (θ) according to a half of a distance (e) between the two adjacent eyelid feature points (114-123, 125-133) and the eyeliner width value (d1), the angle (θ) being an included angle between a first line segment (L1) formed by connecting the two adjacent eyelid feature points (A, C, 114-123, 125-133) and a second line segment (L2) formed by connecting the eyeliner reference points (B1-B20) with one of the two adjacent eyelid feature points (A, C, 114-123, 125-133), and the processor (135) calculates the eyeliner reference points (B1-B20) according to the angle (θ) and a first indication point (P1) at a middle of the two adjacent eyelid feature points (A, C, 114-123, 125-133).

4.    The device (100) for eyeliner-wearing guide according to claim 1, wherein the eye feature points (114-134) further comprise an outer corner feature point (124) corresponding to the eye portion (E1, E2),
the processor (135) calculates an eyeliner end guide point (PF1) according to the outer corner feature point (124), and a first upper eyelid feature point (123) and a first lower eyelid feature point (125) adjacent to the outer corner feature point (124),
the processor (135) forms the eyeliner guide area (310-1-310-6, EL1, EL2) by connecting the eye reference points (B1-B20) and the eyeliner end guide point (PF1) in sequence.

5.    The device (100) for eyeliner-wearing guide according to claim 4, wherein each of the eye width tables is further provided with an outer corner eyeliner width value (d2) corresponding to the outer corner feature point (124),
the processor (135) calculates a second indication point (P2) at a middle of the first upper eyelid feature point (123)

and the first lower eyelid feature point (125), forms an outer corner reference point (PF) that is distanced from the outer corner feature point (124) by the outer corner eyeliner width value (d2) in a direction from the second indication point (P2) towards the outer corner feature point (124), and forms the eyeliner end guide point (PF1) according to the eyeliner type and the outer corner reference point (PF).

**6.** The device (100) for eyeliner-wearing guide according to claim 1, wherein the image capturing device (110) captures the facial image of the user in real time, the processor (135) calculates the eyeliner guide area (310-1-310-6, EL1, EL2) in real time, and the display displays the facial image and the eyeliner guide area (310-1-310-6, EL1, EL2) corresponding thereto in real time.

**7.** The device (100) for eyeliner-wearing guide according to claim 1, wherein the eyeliner type comprises one of a downturned eyeliner, an upturned eyeliner, a rounded eyeliner, a long eye-liner, a close-set eyeliner and a wide-set eyeliner, or a combination of the above.

**Patentansprüche**

**1.** Vorrichtung (100) für eine Anleitung zum Tragen von Eyeliner, die Folgendes umfasst:

eine Bildaufnahmevorrichtung (110), die konfiguriert ist, ein Gesichtsbild eines Anwenders aufzunehmen, wobei das Gesichtsbild wenigstens einen Augenabschnitt (E1, E2) des Anwenders umfasst;
einen Prozessor (135), der konfiguriert ist, das Gesichtsbild zu empfangen, mehrere Augenmerkmalspunkte (114-134, NF1-NF4) in Übereinstimmung mit dem Gesichtsbild zu erhalten und einen Eyeliner-Anleitungsbereich (310-1-310-6, EL1, EL2) zu erhalten, indem er eine Berechnung in Übereinstimmung mit den Augenmerkmalspunkten (114-134, NF1-NF4) und einem Eyeliner-Typ durchführt; und
eine Anzeige (140), die konfiguriert ist, das Gesichtsbild des Anwenders und den entsprechenden Eyeliner-Anleitungsbereich (310-1-310-6, EL1, EL2) anzuzeigen, um den Anwender anzuleiten, ein Make-up in Übereinstimmung mit dem Eyeliner-Anleitungsbereich (310-1-310-6, EL1, EL2) zu tragen, wobei die Augenmerkmalspunkte mehrere Merkmalspunkte (114-123) des oberen Augenlids und mehrere Merkmalspunkte (125-133) des unteren Augenlids in Übereinstimmung mit dem Augenabschnitt (E1, E2) umfassen,
wobei der Prozessor (135) in Übereinstimmung mit zwei benachbarten Augenlid-Merkmalspunkten (114-123, 125-133) der Merkmalspunkte (114-123) des oberen Augenlids oder der Merkmalspunkte (125-133) des unteren Augenlids und einem Eyeliner-Breitenwert (d1) der zwei benachbarten Augenlid-Merkmalspunkte (114-123, 125-133), die für den Eyeliner-Typ erhalten wurden, jeden der Eyeliner-Referenzpunkte (B1-B20) in Übereinstimmung mit den zwei benachbarten Augenlid-Merkmalspunkten (114-123, 125-133) berechnet und
der Prozessor (135) den Eyeliner-Anleitungsbereich (EL1, EL2) durch Verbinden der Eyeliner-Referenzpunkte (B1-B20) bildet.

**2.** Vorrichtung (100) für eine Anleitung zum Tragen von Eyeliner nach Anspruch 1, wobei der Eyeliner-Typ mit einer entsprechenden Eyeliner-Breitentabelle versehen ist und wobei die Eyeliner-Breitentabelle mit den entsprechenden Eyeliner-Breitenwerten (d1) in Übereinstimmung mit jedem der Merkmalspunkte (114-123) des oberen Augenlids und der Merkmalspunkte (125-134) des unteren Augenlids versehen ist,
wobei der Eyeliner-Breitenwert (d1), der den zwei benachbarten Eyeliner-Merkmalspunkten (114-123, 125-133) entspricht, durch die Eyeliner-Breitentabelle des Eyeliner-Typs erhalten wird.

**3.** Vorrichtung (100) für eine Anleitung zum Tragen von Eyeliner nach Anspruch 1, wobei der Prozessor (135) einen Winkel ($\theta$) in Übereinstimmung mit dem halben Abstand (e) zwischen den zwei benachbarten Augenlid-Merkmalspunkten (114-123, 125-133) und dem Eyeliner-Breitenwert (d1) berechnet, wobei der Winkel ($\theta$) ein Winkel ist, der zwischen einem ersten Liniensegment (L1), das gebildet wird, indem die zwei benachbarten Augenlid-Merkmalspunkte (A, C, 114-123, 125-133) verbunden werden, und einem zweiten Liniensegment (L2), das gebildet wird, indem die Eyeliner-Referenzpunkte (B1-B20) mit einem der zwei benachbarten Augenlid-Merkmalspunkte (A, C, 114-123, 125-133) verbunden werden, eingeschlossen ist,
und wobei der Prozessor (135) die Eyeliner-Referenzpunkte (B1-B20) in Übereinstimmung mit dem Winkel ($\theta$) und einem ersten Anzeigepunkt (P1) bei der Mitte der zwei benachbarten Augenlid-Merkmalspunkte (A, C, 114-123, 125-133) berechnet.

**4.** Vorrichtung (100) für eine Anleitung zum Tragen von Eyeliner nach Anspruch 1, wobei die Augen-Merkmalspunkte (114-134) ferner einen Merkmalspunkt (124) für die äußere Ecke in Übereinstimmung mit dem Augenabschnitt (E1, E2) umfassen,
wobei der Prozessor (135) einen Eyeliner-Anleitungsendpunkt (PF1) in Übereinstimmung mit dem Merkmalspunkt (124) für die äußere Ecke und einen ersten Merkmalspunkt (123) des oberen Augenlids und einen ersten Merkmalspunkt (125) des unteren Augenlids angrenzend an den Merkmalspunkt (124) für die äußere Ecke berechnet, wobei der Prozessor (135) den Eyeliner-Anleitungsbereich (310-1-310-6, EL1, EL2) bildet, indem er die Augen-Referenzpunkte (B1-B20) und den Eyeliner-Anleitungsendunkt (PF1) der Reihe nach verbindet.

**5.** Vorrichtung (100) für eine Anleitung zum Tragen von Eyeliner nach Anspruch 4, wobei jede der Augenbreitetabellen ferner mit einem Eyeliner-Breitenwert (d2) für die äußere Ecke in Übereinstimmung mit dem Merkmalspunkt (124) für die äußere Ecke versehen ist,
der Prozessor (135) einen zweiten Anzeigepunkt (P2) bei der Mitte des ersten Merkmalspunkts (123) des oberen Augenlids und des ersten Merkmalspunkts (125) des unteren Augenlids berechnet, einen Referenzpunkt (PF) für die äußere Ecke bildet, der von dem Merkmalspunkt (124) für die äußere Ecke um den Eyeliner-Breitenwert (d2) für die äußere Ecke in einer Richtung von dem zweiten Anzeigepunt (P2) zu dem Merkmalspunkt (124) für die äußere Ecke beabstandet ist, und den Eyeliner-Anleitungsendpunkt (PF1) in Übereinstimmung mit dem Eyeliner-Typ und dem Referenzpunkt (PF) für die äußere Ecke bildet.

**6.** Vorrichtung (100) für eine Anleitung zum Tragen von Eyeliner nach Anspruch 1, wobei die Bildaufnahmevorrichtung (110) das Gesichtsbild des Anwenders in Echtzeit aufnimmt, der Prozessor (135) den Eyeliner-Anleitungsbereich (310-1-310-6, EL1, EL2) in Echtzeit berechnet und die Anzeige das Gesichtsbild und den Eyeliner-Anleitungsbereich (310-1-310-6, EL1, EL2) in Übereinstimmung damit in Echtzeit anzeigt.

**7.** Vorrichtung (100) für eine Anleitung zum Tragen von Eyeliner nach Anspruch 1, wobei der Eyeliner-Typ einen abwärts gebogenen Eyeliner, einen aufwärts gebogenen Eyeliner, einen abgerundeten Eyeliner, einen langen Eyeliner, einen eng eingestellten Eyeliner und einen weit eingestellten Eyeliner oder eine Kombination davon umfasst.

## Revendications

**1.** Dispositif (100) destiné à guider l'application d'un eye-liner, comportant :

un dispositif de capture d'image (110), configuré pour capturer une image faciale d'une utilisatrice, dans lequel l'image faciale comporte au moins une portion d'oeil (E1, E2) de l'utilisatrice ;
un processeur (135), configuré pour recevoir l'image faciale, obtenir une pluralité de points de caractéristique d'oeil (114-134, NF1-NF4) en fonction de l'image faciale, et obtenir une zone de guidage d'eye-liner (310-1-310-6, EL1, EL2) en effectuant un calcul en fonction des points de caractéristique d'oeil (114-134, NF1-NF4) et d'un type d'eye-liner ; et
un affichage (140), configuré pour afficher l'image faciale de l'utilisatrice et la zone de guidage d'eye-liner (310-1-310-6, EL1, EL2) correspondante pour guider l'utilisatrice pour l'application d'un maquillage en fonction de la zone de guidage d'eye-liner (310-1-310-6, EL1, EL2), dans lequel les points de caractéristique d'oeil comportent une pluralité de points de caractéristique de paupière supérieure (114-123) et une pluralité de points de caractéristique de paupière inférieure (125-133) correspondant à la portion d'oeil (E1, E2),
dans lequel le processeur (135) calcule, en fonction de deux points de caractéristique de paupière (114-123, 125-133) adjacents parmi les points de caractéristique de paupière supérieure (114-123) ou les points de caractéristique de paupière inférieure (125-133) et d'une valeur de largeur d'eye-liner (d1) des deux points de caractéristique de paupière (114-123, 125-133) adjacents obtenus pour le type d'eye-liner, chacun des points de référence d'eye-liner (B1-B20) correspondant aux deux points de caractéristique de paupière (114-123, 125-133) adjacents, et
le processeur (135) forme la zone de guidage d'eye-liner (EL1, EL2) en reliant les points de référence d'eye-liner (B1-B20).

**2.** Dispositif (100) destiné à guider l'application d'un eye-liner selon la revendication 1, dans lequel le type d'eye-liner est fourni avec un tableau de largeur d'eye-liner correspondant, et le tableau de largeur d'eye-liner est fourni avec des valeurs de largeur d'eye-liner (d1) correspondantes correspondant à chacun des points de caractéristique de paupière supérieure (114-123) et des points de caractéristique de paupière inférieure (125-134),
dans lequel la valeur de largeur d'eye-liner (d1) correspondant aux points de caractéristique de paupière (114-123, 125-133) adjacents est obtenue par l'intermédiaire du tableau de largeur d'eye-liner du type d'eye-liner.

3. Dispositif (100) destiné à guider l'application d'un eye-liner selon la revendication 1, dans lequel le processeur (135) calcule un angle (θ) en fonction d'une moitié d'une distance (e) entre les deux points de caractéristique de paupière (114-123, 125-133) adjacents et la valeur de largeur d'eye-liner (d1), l'angle (θ) étant un angle inclus entre un premier segment de ligne (L1) formé en reliant les deux points de caractéristique de paupière (A, C, 114-123, 125-133) adjacents et un second segment de ligne (L2) formé en reliant les points de référence d'eye-liner (B1-B20) avec l'un des deux points de caractéristique de paupière (A, C, 114-123, 125-133) adjacents, et le processeur (135) calcule les points de référence d'eye-liner (B1-B20) en fonction de l'angle (θ) et d'un premier point d'indication (P1) en un milieu des deux points de caractéristique de paupière (A, C, 114-123, 125-133) adjacents.

4. Dispositif (100) destiné à guider l'application d'un eye-liner selon la revendication 1, dans lequel les points de caractéristique d'oeil (114-134) comportent en outre un point de caractéristique de coin extérieur (124) correspondant à la portion d'oeil (E1, E2), le processeur (135) calcule un point de guidage de fin d'eye-liner (PF1) en fonction du point de caractéristique de coin extérieur (124), et un premier point de caractéristique de paupière supérieure (123) et un premier point de caractéristique de paupière inférieure (125) adjacents au point de caractéristique de coin extérieur (124), le processeur (135) forme la zone de guidage d'eye-liner (310-1-310-6, EL1, EL2) en reliant les uns à la suite des autres les points de référence d'oeil (B1-B20) et le point de guidage de fin d'eye-liner (PF1).

5. Dispositif (100) destiné à guider l'application d'un eye-liner selon la revendication 4, dans lequel chacun des tableaux de largeur d'oeil est en outre fourni avec une valeur de largeur d'eye-liner de coin extérieur (d2) correspondant au point de caractéristique de coin extérieur (124), le processeur (135) calcule un second point d'indication (P2) en un milieu du premier point de caractéristique de paupière supérieure (123) et du premier point de caractéristique de paupière inférieure (125), forme un point de référence de coin extérieur (PF) qui est distant du point de caractéristique de coin extérieur (124) d'une valeur égale à la valeur de largeur d'eye-liner de coin extérieur (d2) dans une direction allant du second point d'indication (P2) vers le point de caractéristique de coin extérieur (124), et forme le point de guidage de fin d'eye-liner (PF1) en fonction du type d'eye-liner et du point de référence de coin extérieur (PF).

6. Dispositif (100) destiné à guider l'application d'un eye-liner selon la revendication 1, dans lequel le dispositif de capture d'image (110) capture l'image faciale de l'utilisatrice en temps réel, le processeur (135) calcule la zone de guidage d'eye-liner (310-1-310-6, EL1, EL2) en temps réel, et l'affichage affiche l'image faciale et la zone de guidage d'eye-liner (310-1-310-6, EL1, EL2) correspondant à celle-ci en temps réel.

7. Dispositif (100) destiné à guider l'application d'un eye-liner selon la revendication 1, dans lequel le type d'eye-liner comporte un trait parmi un trait d'eye-liner descendant vers le bas, un trait d'eye-liner remontant vers le haut, un trait d'eye-liner arrondi, un trait d'eye-liner long, un trait d'eye-liner rapproché et un trait d'eye-liner espacé, ou une combinaison des traits ci-dessus.

**FIG. 1**

**FIG. 2**

Downturned eye — 310-1

Upturned eye — 310-2

Rounded eye — 310-3

Long eye — 310-4

Close-set eye — 310-5

Wide-set eye — 310-6

FIG. 3

Capturing a facial image of a user, the facial image at least including an eye portion of the user — S410

Obtaining a plurality of eye feature points according to the facial image, and obtaining an eyeliner guide area by performing a calculation according to the eye feature points and an eyeliner type — S420

Displaying the facial image and the corresponding eyeliner guide area to guide the user for wearing a makeup according to the eyeliner guide area — S430

# FIG. 4

Calculating, according to two adjacent eyelid feature points among the upper eyelid feature points or the lower eyelid feature points and an eyeliner width value of the two adjacent eyelid feature points obtained for the eyeliner type, each of eyeliner reference points corresponding to the two adjacent eyelid feature points — S510

Calculating an eyeliner end guide point according to the outer corner feature point, and a first upper eyelid feature point and a first lower eyelid feature point adjacent to the outer corner feature point — S520

Forming the eyeliner guide area by connecting the eye reference points and the eyeliner end guide point in sequence — S530

# FIG. 5

FIG. 6

FIG. 7

FIG. 8

FIG. 9

**EP 3 446 592 B1**

**REFERENCES CITED IN THE DESCRIPTION**

**Patent documents cited in the description**

- JP 2000285222 A
- US 20120044335 A1
- US 20160357578 A1